# EUROPEAN PATENT APPLICATION

(11) **EP 2 894 765 A1**
(43) Date of publication of application: **15.07.2015**
(21) Application number: 14151145.1
(22) Date of filing: 14.01.2014
(51) Int. Cl.: H02K 1/02, H02K 1/16, H02K 7/18, H02K 15/02, F03D 9/00

(54) **Stator for a wind turbine generator**

(71) Applicant: Siemens Aktiengesellschaft, 80333 München (DE)
(72) Inventor: Azar, Ziad, Sheffield, S6 2NR (GB); Thomas, Arwyn, Cheshire, SK8 6HW (GB)

(57) **Abstract**

It is described a stator portion (101,201), in particular for a wind turbine generator (801), comprising: a yoke portion (101, 201) forming a section of an annulus; and plural teeth (107, 207) protruding from the yoke portion (101,201) in different radial directions (109), wherein the stator portion comprises grain oriented material having a grain orientation direction (113, 213) from which the different radial directions (109) deviate by less than a threshold.

## Description

### Field of invention

The present invention relates to a stator portion for an electromagnetic machine, in particular a wind turbine generator, to a stator for an electromagnetic machine, to a wind turbine and to a method for manufacturing a stator portion, wherein the stator portion and stator is in particular improved regarding torque, torque ripple reduction and efficiency of power generation.

### Art Background

A wind turbine generator comprises a stator having plural teeth around which at least one electrical conductor is wound. Relative to the stator a rotor having magnets (in particular permanent magnets) attached thereto rotates and generates in the one or more windings of the stator electrical voltages. Thereby, electrical energy can be generated by rotating a rotor shaft coupled with the generator, at which rotor shaft plural wind turbine blades are being driven by impacting wind.

Conventionally, high performance non-oriented steel has been utilized for manufacturing the stator. It has been observed that the conventional electromagnetic machine, such as a motor or a generator comprising a stator can be improved in particular in respect to torque, efficiency, power loss and torque ripple reduction. Thus, there may be a need for a stator portion for an electromagnetic machine, in particular a wind turbine generator, for a stator for an electromagnetic machine, for a wind turbine and for a method for manufacturing a stator portion, wherein the above-mentioned problems are at least partially mitigated or even eliminated.

### Summary of the Invention

This need may be met by the subject matter according to the independent claims. Advantageous embodiments of the present invention are described by the dependent claims.

According to an embodiment of the present invention, it is provided a stator portion for an electromagnetic machine, in particular for a wind turbine generator, comprising a yoke portion forming a section of an annulus and plural teeth protruding from the yoke portion in different radial directions, wherein the stator portion comprises grain oriented steel material having a grain orientation direction from which the different radial directions deviate by less than a threshold.

The stator portion may be utilized for forming a stator for an electromotor or a stator for a (wind turbine) generator. The wind turbine generator may in particular also comprise, beside a stator formed from plural stator portions, a rotor having a magnetic field source, in particular permanent magnets, attached to it. In particular, the stator formed from plural stator portion may be an inner stator or an outer stator having a respective outer rotor and inner rotor, respectively.

The yoke portion may be shaped in a section of a circle. The plural teeth may either protrude (from the yoke portion) radially outwards (for an inner stator) or radially inwards (for an outer stator). The plural teeth may be directly connected to the yoke portion, in particular in such a way that the yoke portion and the plural teeth are integrally formed, in particular by a laminated stack of sheets. The teeth may exhibit any cross-sectional shape such as substantially rectangular, oval, circular, quadratic or the like. In the completed stator, several stator portions may be (circumferentially) attached to each other to form a complete annulus. Between adjacent teeth, slots may be formed in which at least one conductive wire may be arranged or wound.

The radial direction in which a particular tooth protrudes from the yoke may also be referred to as a longitudinal axis of the tooth. Thereby, each of the radial directions of the plural teeth may be perpendicular to an axial direction being an axis (being aligned with a rotation axis of a rotor of the electromagnetic machine) of the annulus, in particular circular annulus. Furthermore, the teeth may be circumferentially equally spaced apart from each other, wherein the circumferential direction is perpendicular to the radial direction and is also perpendicular to the axial direction. In particular, the teeth may, in the completed stator, form a core for respective wires or coils wound around the teeth, wherein in the core a high magnetic flux may be generated during operation.

The stator portion comprises the grain oriented (ferromagnetic) material having ferromagnetic grains not randomly oriented but oriented to have a preferred orientation, in order to increase the magnetic flux within the teeth. Thereby, it may be known that grain oriented steel may take about 30% extra flux in the grain orientation direction (being substantially a rolling direction during manufacturing) compared to non-oriented steel. Conventionally, grain oriented material may not have been used for manufacturing a stator, since a beneficial increase of the magnetic flux would only be effected in those portions of the stator in which a direction of the intended magnetic flux is aligned or coincides with the grain orientation direction. However, if a stator is manufactured from a single piece of grain oriented material, even if there are portions (e.g. some teeth) of the stator in which the grain orientation direction is aligned with an intended direction of a magnetic flux, there are other portions (e.g. some other teeth) where the grain orientation direction is for example perpendicular to the intended direction of magnetic flux. However, according to embodiments of the present invention, a stator may be assembled from plural stator portions, wherein each stator portion comprises grain oriented steel material having a respective stator portion grain orientation direction optimized, to meet requirements of most of the teeth of this particular stator portion, i.e. having the stator portion grain orientation direction to be aligned or to at least approximately coincide with a relatively large fraction of intended magnetic flux direction of the teeth (the intended flux direction of a tooth being substantially the direction of the longitudinal axis of the tooth). Thereby, for a relatively large fraction of teeth, an increase of the magnetic flux compared to a stator manufactured from a non-oriented grain steel material may be achieved.

The different radial directions of the teeth deviate by less than a threshold from the grain orientation direction, wherein the threshold may be for example 35° or even less than 35°. In particular, the stator portion may be employed in large scale electric machines, wherein the respective stator is normally segmented, for example in six segments. Employing or manufacturing a stator from plural stator portions or stator segments may simplify and ease the laminations and the whole manufacturing process and also may simplify the handling. Thereby, stator teeth may be cut from a provided grain oriented material in or relatively close to the rolling direction or close to the grain orientation direction. Utilizing the grain oriented material, in particular grain oriented steel lamination, may become feasible and very beneficial, since the reduction in the BH characteristics in angle close to the rolling direction (or grain orientation direction) may be relatively small. Whereas the grain orientation direction may be beneficially aligned such as to increase the magnetic flux in most of the teeth, the magnetic flux may not be increased in the yoke portion. However, the magnetic saturation in the yoke part may be relatively small compared to the teeth. Thereby, the electromagnetic performance may only slightly be influenced.

Embodiments of the present invention may provide the advantages of a significant average output torque increase, effective torque ripple reduction and improved efficiency and annual energy production of a generator using a stator assembled from plural stator portions, resulting in increased profit over the generator life cycle.

According to an embodiment of the present invention, the grain oriented material comprises grain oriented ferromagnetic material, in particular comprising steel.

In the direction of the grain orientation direction, a greater magnetic flux may be achieved compared to non-oriented material. Steel having grains oriented may be easily available.

According to an embodiment of the present invention, a first magnetic flux density (B) excited by a first magnetic field strength (H) in the grain orientation direction is greater, in particular by between 10% and 25%, than a second magnetic flux density (B) excited by a second magnetic field strength (H) having a same intensity as the first magnetic field strength but a direction different, in particular by at least 10°, from the grain orientation direction.

The grains in the grain oriented material may comprise microcrystals. Crystal axes of the microcrystals may be oriented or aligned and may be characterized having one particular axis (defined by for example by weighted vector sum of the three crystal axes) which has the property that along this particular axis the magnetic flux of the material is greater than in any other direction when excited by a particular magnetic field.

In order to decide, whether a given material comprises grain oriented material, experimental tests may be conducted in which the given material is excited by magnetic fields in different directions and by measuring the magnetic flux densities for these different excitations. If the generated magnetic flux densities differ when excitation is performed in the rolling direction and perpendicular to the rolling direction, then the material comprises grain oriented material. If the magnetic flux densities generated using magnetic fields in the rolling direction and perpendicular to the rolling direction do not differ, the material in question does not comprise grain oriented material. Non-grain orientated steel has a minor difference in the rolling and non-rolling direction. Grain orientated has a larger difference due to the grain sizes which are grown as part of the annealing process for the grain orientated steel.

If the material comprises grain oriented material, the grain orientation direction may for example be experimentally determined as this direction, along which excitation by a magnetic field results in a maximum magnetic flux density.

In particular, a magnetic field (H) may be excited by running an electric current through an electric conductor wound around the material in question, in particular wound around a tooth of a product in question. Furthermore, microscopic examinations may be performed, in order to determine a presence of grains which are oriented in the material in question. The grain oriented material may comprise grain oriented electrical steel having in particular a silicon level of around 3%. The grain oriented material may have been formed by rolling, wherein the grain orientation direction may correspond to or may be equal to the rolling direction. Using magneto-optical sensors and a polarizer microscope, grains and in particular grain orientations, may be observed and analyzed. In non-oriented material, the grains may be randomly distributed, while in oriented materials or grain oriented material, the grains may have a higher probability of being oriented corresponding to or equal to the grain orientation direction. The degree of grain orientation (e.g. the fraction of grains oriented according to the grain orientation direction) may vary as long as a dominant fraction of grains is aligned with the grain orientation direction.

According to an embodiment of the present invention, a saturation magnetic flux density is larger, in particular by between 10% and 25%, in the grain orientation direction than in a direction different from the grain orientation direction.

A saturation magnetic flux density may be a maximum magnetic flux density which is achievable in a given material and in a given direction. In order to reach a saturation magnetic flux density, a relatively high magnetic field strength may be required. According to this embodiment of the present invention, thereby, the maximum magnetic flux density is larger in the grain orientation direction than in any other direction. This may be very advantageous, in a case, where the stator, or in particular the teeth, are operated close or at the saturation of the magnetic material, such as when using the stator assembled from plural stator portions in a wind turbine generator.

According to an embodiment of the present invention, different regions of the stator portion have the same orientation of (ferromagnetic, in particular steel) grains.

Thus, the stator portion may be manufactured from a single sheet or plural single material sheets which are stacked on top of each other. Each individual sheet may be rolled in a single rolling procedure. Thereby, the yoke portion and the teeth may be integrally formed from a continuous material sheet or in particular formed from a stack of single material sheets each material sheet comprising a yoke portion and plural teeth portions. Thereby, manufacturing may be simplified. According to an embodiment of the present invention, radial directions of first teeth deviate from the grain orientation direction by respective first angles, wherein radial directions of second teeth deviate from the grain orientation direction by respective second angles, wherein the first angles have signs opposite to signs of the second angles.

Thereby, deviations of the radial directions (or longitudinal axes) of the teeth from the grain orientation direction may in average be kept very small or in particular as small as possible, in order to result in a beneficial effect regarding the magnitude of the achievable magnetic flux density in a large portion or in the majority of teeth.

According to an embodiment of the present invention, an average radial direction of the different radial directions of the teeth, deviates from the grain orientation direction by less than 20°, in particular 10°, further in particular 5°.

The average radial direction may for example be obtained by vectorially adding unit direction vectors of the radial directions of the teeth and dividing by the number of teeth. Ideally, the average radial direction may coincide or may be aligned (parallel) with the grain orientation direction. Thereby, the magnetic flux density may be improved for a majority of teeth.

According to an embodiment of the present invention, an absolute value of a deviation between the grain orientation direction and the radial direction of a respective tooth decreases from a first circumferential end of the stator portion, assumes a minimum in a central circumferential region and increases towards a second circumferential end of the stator portion.

In particular, the deviation (between the respective radial direction and the grain orientation direction) may have a maximum at the circumferential ends of the stator portion and the minimum may in particular be assumed in the centre between the circumferential ends of the stator portion. Thereby, magnetic flux density may be improved for a large number of teeth comprised in the stator portion. The more stator portions are used to assemble a whole stator the better the performance may be..

According to an embodiment of the present invention, the yoke portion forms between a sixth part and a twelfth part of an annulus.

In particular, thus, a stator may be formed by six, eight, ten, twelve or even more stator portions which, correspondingly, span a respective section of an annulus. The more stator portions form the completed stator, the higher the improvement regarding the magnetic flux density may be, since the deviation between the radial direction of the respective teeth of each stator portion from the respective stator portion grain orientation direction may decrease with a higher number of stator portions forming the completed stator. However, manufacturing may be further complicated such that a compromise may be found between manufacturing problems and incomplete improvement regarding magnetic flux density.

According to an embodiment of the present invention, the stator portion comprises plural sheets of ferromagnetic material, electrically isolated from each other, each sheet having a sheet grain orientation direction deviating from the grain orientation direction by less than 20°, in particular less than 10°.

Thereby, conventionally employed manufacturing steps may be included, thereby simplifying the manufacturing.

According to an embodiment of the present invention, it is provided a stator for an electromagnetic machine, in particular generator, the stator comprising a first stator portion according to one of the preceding embodiments, having a first stator portion grain orientation direction and at least one second stator portion according to one of the preceding embodiments, having a second stator portion grain orientation direction, wherein the first stator portion and the at least one second stator portion are fixed to each other to form an annulus, wherein the first stator portion grain orientation direction and the second stator portion grain orientation direction differ by 360°/N, wherein N is the total number of the at least one second stator portion plus 1.

The first stator grain orientation direction is the grain orientation direction of the first stator portion and the second stator grain orientation direction is the grain orientation direction of the second stator portion.

The first stator portion and the second stator portion may be fixed by any fixing means, such as screws, bolts and the like. Thus, the assembled stator may comprise plural stator portions each having a particular stator portion grain orientation direction, wherein when the stator portions are (prior to assembling to form the stator) superimposed, all stator portion grain orientation directions may coincide (be parallel). Thus, each stator portion may be manufactured in an identical fashion.

According to an embodiment of the present invention, the stator further comprises at least one electrically conductive winding arranged in slots between teeth. According to an embodiment of the present invention the diameter and the number of teeth may assume different values.

The larger the diameter of the stator (the diameter being for example being measured between radially inner ends or outer ends of the stator), the smaller the curvature of the respective stator is. Further, for a lower and lower curvature, the radial directions of the plural teeth may deviate less and less from the grain orientation direction. Consequently, improvement regarding the maximum magnetic flux density may be achieved for a larger and larger portion of the teeth of the respective stator portion. Thereby, in particular, embodiments of the present invention, may be advantageously employed in large diameter electromagnetic machines, such as generators for wind turbines.

According to an embodiment of the present invention, it is provided a wind turbine having a generator comprising a stator (and also further comprising an in particular permanent magnet rotor) according to one of the embodiments as described above.

It should be understood that features individually or in any combination disclosed, described, applied or employed for a stator portion for a stator or a wind turbine generator may also be applied individually or in any combination to a method for manufacturing a stator portion according to an embodiment of the present invention and vice versa.

According to an embodiment of the present invention, it is provided a method for manufacturing a stator portion, the method comprising providing grain oriented material having a grain orientation direction; from the grain oriented material, forming a yoke portion in a shape of a section of an annulus and plural teeth protruding from the yoke portion in different radial directions which deviate from the grain orientation direction by less than a threshold.

The method may further comprise to manufacture the grain oriented material, such as for example involving rolling steel in a particular rolling direction which may then substantially correspond or may be equal to the grain orientation direction of the grain oriented material. Furthermore, several sheets of grain oriented material may be stacked on top of each other and laminated. Furthermore, the stack of laminated grain oriented metal or material sheets (or each sheet separately) may be cut in order to form the yoke portion and the plural teeth.

Furthermore, a method for manufacturing a stator may comprise method steps of the method for manufacturing a stator portion and may further comprise fixing plural stator portions circumferentially adjacent to each other to form a complete annulus.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a portion of a generator comprising a stator portion according to an embodiment of the present invention;
Fig. 2 schematically illustrates a stator portion according to an embodiment of the present invention;
Fig. 3 illustrates a graph relating a flux density to a field strength according to simulations of electromagnetic machines according to embodiments of the present invention and according to comparative examples;
Fig. 4 illustrates curves relating the magnetic flux density to the magnetic field strength for different radial directions of teeth relative to a grain orientation direction;
Fig. 5 illustrates simulation results regarding generated torque and torque ripple reduction according to embodiments of the present invention;
Fig. 6 illustrates an extra efficiency of electromagnetic machines in relation to power output provided according to embodiments of the present invention;
Fig. 7 illustrates a curve relating the total extra profit in dependence of a lifetime of an electric generator provided according to an embodiment of the present invention; and
Fig. 8 schematically illustrates a wind turbine according to an embodiment of the present invention comprising a stator according to an embodiment of the present invention.

### Detailed Description

The illustration in the drawings is in schematic form.

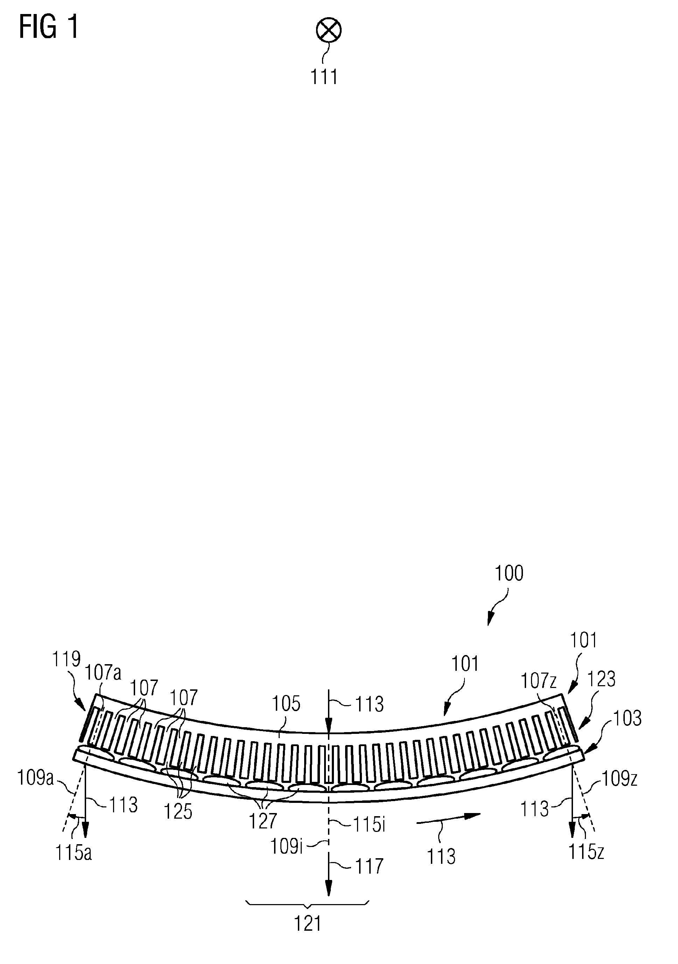

Fig. 1 schematically illustrates a generator portion 100 comprising a stator portion 101 according to an embodiment of the present invention and also a rotor portion 103. The stator portion 101 comprises a yoke portion 105 and plural teeth 107a, ... 107z protruding from the yoke portion in different radial directions 109a, 109b, ..., 109i, ..., 109z. The axial direction 111 is perpendicular to the drawing plane of Fig. 1 and the rotor portion 103 rotates around the axial direction 111. The circumferential direction 113 is perpendicular to the axial direction 111 and also to the radial direction at a circumferential position, wherein the circumferential direction is considered. The rotation axis 111 lies actually outside the Fig. 1 but has been shifted closer to the stator portion 101 for ease of illustration.

The stator portion 101 comprises grain oriented material having a grain orientation direction 113 from which the different radial directions 109a, ..., 109z deviate by less than a threshold, wherein the deviations are in the illustrated example labelled by reference sign 115a, ..., 115i, ..., 115z for the radial directions 109a, ..., 109i, ..., 109z of the teeth 107a, ..., 107i, ..., 107z, respectively.

In particular, the grain oriented material comprised in the stator portion 101 comprises grains having the same preferred orientation with the grain orientation direction 113 throughout the stator portion 101, i.e. each of the teeth 107a, ..., 107i, ..., 107z and also the yoke portion 105 all have the same orientation of grains or same preferred orientation of the grains having the grain orientation direction 113.

In particular, the deviation between the grain orientation direction 113 and the radial direction 109i (of tooth 107i circumferential at a center of the stator portion 101) is 0, while the deviation 115a between the grain orientation direction 113 and the radial direction 109a is positive, while the deviation 115z between the grain orientation direction 113 and the radial direction 109z is negative. In particular, the average radial direction 117 is obtainable by summing in a vectorial fashion all radial directions 109a, ..., 109i, ..., 109z. Thereby, the average radial direction 117 deviates from the grain orientation direction 113 by less than 5°, in particular corresponds to (is equal to or parallel to) the grain orientation direction 113. In particular, the deviation between the grain orientation direction 113 and the radial directions 109 decrease from a first circumferential end 119 of the stator portion 101, assumes a minimum in a central circumferential region 121 and increases towards a second circumferential end 123 of the stator portion 101. Between adjacent teeth, slots 125 are present which allow arranging one or more electric conductive wires therein.

The rotor portion 103 comprises plural magnets 127 which are arranged radially outwards of the radial outer ends of the teeth 107a, ..., 107z, such that a small gap is formed between the magnets 127 and the radially outer end of the teeth 107a, ..., 107z.

The portion 100 of a generator in the illustrated Fig. 1 comprises an outer rotor portion 103 and an inner stator portion 101. Other embodiments of the present invention comprise an outer stator portion and an inner rotor portion 103.

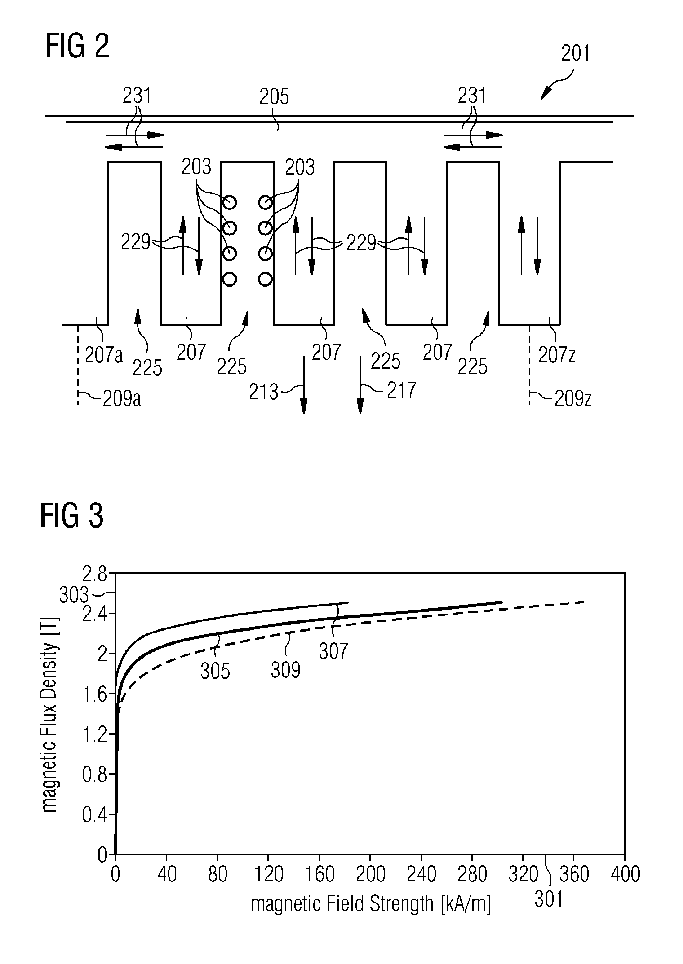

Fig. 2 schematically illustrates a stator portion 201 according to an embodiment of the present invention. The stator portion 201 comprises a yoke portion 205 and plural teeth 207a, ..., 207z which protrude from the yoke portion 205 in different radial directions 209a, ..., 209z, wherein however in Fig. 2, the stator portion 201 is (for ease of illustration) straightened such that the radial directions 209a, ..., 209z appear to have same directions. In particular, the stator portion 201 comprises grain oriented material having a grain orientation direction 213. Furthermore, in Fig. 2, flux directions 229 in the teeth 207a, ..., 207z are indicated and also flux directions 231 are indicated in the yoke portion 205. As can be seen, the flux directions which are intended during an operation in a generator utilizing the stator portion 201 include the intended flux directions 229 within the teeth 207a, ..., 207z that are aligned or coinciding with the grain orientation direction 213, thereby increasing the magnetic flux within the teeth 207a, ..., 207z. Wires 233 are illustrated in one slot 225 and are also present (but not illustrated) in other slots when the stator portion 201 is used in an electromagnetic machine.

In particular, as is illustrated in Fig. 2, although the intended or desired magnetic flux 231 within the yoke portion 205 is perpendicular to the grain orientation direction 213, the yoke portion 205 is (during operation) often not very saturated and thus, the performance may not be severely hampered. Instead, beneficially, the intended or desired magnetic flux direction 229 within the teeth 207a, ..., 207z are co-aligned or parallel to the grain orientation direction 213 (which may be along the rolling direction during manufacturing of stator material) and thus may effectively increase the magnetic flux density within the teeth.

Fig. 3 illustrates graphs relating a magnetic flux density (B) to a magnetic field strength (H), wherein these graphs are considered in embodiments according to the present invention. An abscissa 301 indicates the magnetic field strength and the ordinate 303 indicates the magnetic flux density within the material exposed to the field strength. Thereby, the curve 305 corresponds to the magnetic flux density of non-oriented steel, the curve 307 corresponds to magnetic flux density of grain oriented steel in the rolling direction, i.e. the grain orientation direction, and the curve 309 indicates the magnetic flux density of a grain oriented steel which is perpendicular to the grain orientation direction (the rolling direction).

As can be appreciated from Fig. 3, the magnetic flux density is higher (by between 5% and 20%) for the grain oriented steel (curve 307) in the grain orientation direction than for the non-oriented steel (curve 305) or the grain oriented steel (curve 309) which is in the perpendicular to the grain orientation direction.

In particular, the grain oriented steel may take about 30% extra flux in the rolling direction compared to the non-oriented steel. This property may be beneficially used in large scale electric machines according to embodiments of the present invention, where the stator is assembled from plural stator portions, for example six stator portions. Thereby, the stator teeth may be cut in or very close to the rolling direction or grain orientation direction 113 or 213 as illustrated in Figs. 1 or 2. Thereby, the utilization of the grain oriented steel lamination becomes feasible and very beneficial, since the reduction in the BH-characteristics in angle close to the rolling direction (the grain orientation direction) may be relatively small, as will be further explained in detail below with respect to Fig. 3.

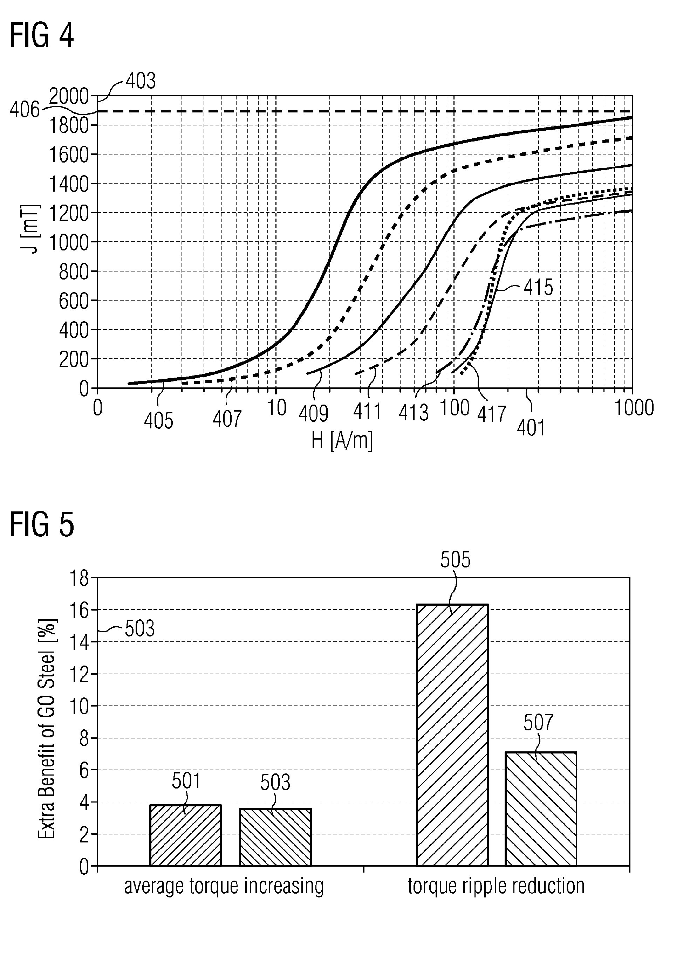

Fig. 4 illustrates curves relating the magnetic field strength H to the magnetic flux density J (also referred to as B) for different deviations from the grain orientation direction. On the abscissa 401, the magnetic field strength H is indicated, while on an ordinate 403, the magnetic flux density J is indicated. The curves 405, 407, 409, 411, 413, 415, 417 indicate the magnetic flux density in dependence of the magnetic field strength if the magnetic field direction deviates by 0°, 15°, 30°, 45°, 60°, 75° and 90° from the grain orientation direction. As can be appreciated from the curves in Fig. 4, the magnetic flux density J is the higher the less the deviation from the grain orientation direction (rolling direction) is. This property is exploited in stator portions according to embodiments of the present invention in that the radial directions of the teeth of the stator portion deviate only by a relatively small amount from the grain orientation direction 113, 213.

A saturation magnetic flux density 406 is larger in the grain orientation direction than in a direction different from the grain orientation direction.

Fig. 5 illustrates a column diagram indicating the average torque increase (column 501 without the skewing and column 503 skewed) and torque ripple reduction (curve 505 without skewing and curve 507 skewed). Thereby, the curves 503, 507 correspond to a so-called skewed magnet portion or rotor portion in which rotor magnets are circumferentially shifted relative to each other in order to reduce a torque ripple. The curves 501, 505 are associated to another rotor type which does not comprise shifted rotor portions (skewing). As can be appreciated from Fig. 5, the extra benefit of grain oriented steel as indicated in the ordinate 503 is almost 4% increase of average torque without skewing (curve 501) and is about 3.5% increase or average torque with a skewed rotor (curve 503). Furthermore, the torque ripple reduction without skewing (curve 505) amounts to above 16%, while the torque ripple reduction of the skewed rotor type (curve 507) amounts to about 7%. Thereby, higher efficiency and less wear or component damage may be achieved.

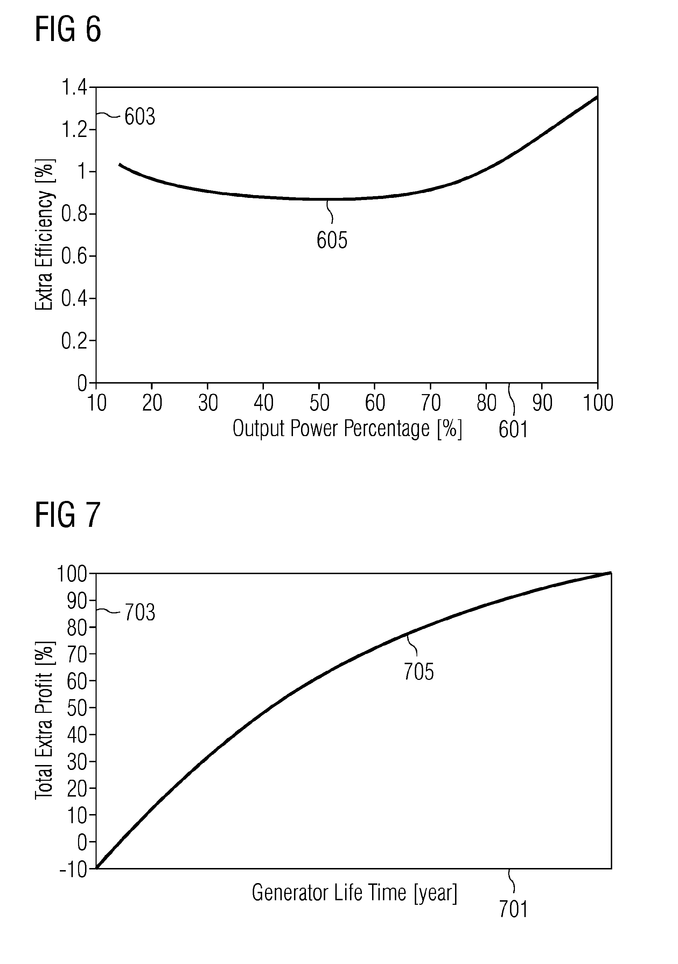

In particular, the initial electromagnetic performance calculations have been performed in order to generate the column diagrams of Fig. 5. From these simulations and calculations it could be concluded that the average output torque of the wind power generation can be increased by about 4%, while the torque ripple may be decreased by around 8% on top of skewing reduction. Furthermore, the iron loss is 50% lower. Consequently, the overall efficiency is increased by 1%, as can be taken from Fig. 6.

In particular, Fig. 6 shows a curve 605 relating the output power percentage (indicated on the abscissa 601) and the extra efficiency in % (indicated on the ordinate 603). Interestingly, the extra efficiency is obtained across almost the entire output power range from 10% to 100% which there amounts to between 1.3 and 0.9. Although the price of the grain oriented steel may be two times as high compared to the non-oriented steel, the additional efficiency will offset the costs with increase annual energy output, i.e. within one year as the initial investigations confirmed.

This is illustrated in Fig. 7 showing a curve 705 relating the generator lifetime (illustrated on the abscissa 701) to the total extra profit (indicated on the ordinate 703). The curve 705 starts at a negative profit at -10% but then the total extra profit increases beyond 0 to reach 100% at the end of generator life cycle at the right end of the abscissa.

The use of a stator portion according to an embodiment of the present invention and assembling a stator according to an embodiment of the present invention using a method for manufacturing a stator portion and also a stator according to embodiments of the present invention may therefore have the following advantages:

There may be a significant average output torque increase; there may be an effective torque ripple reduction and the efficiency and the annual energy production of the generator may be improved, which may result in increased profit over the generator lifetime.

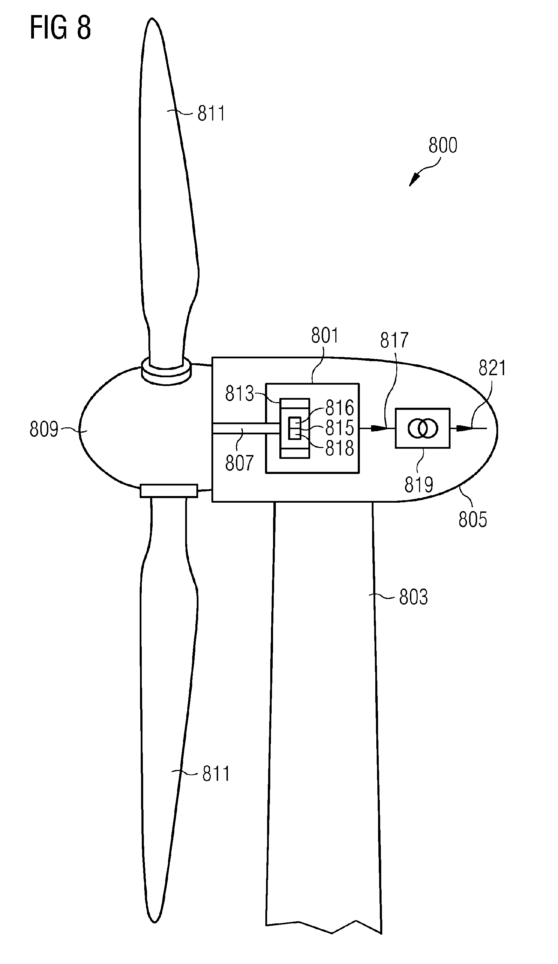

Fig. 8 schematically illustrates a wind turbine 800 according to an embodiment of the present invention comprising a generator 801 according to an embodiment of the present invention. The wind turbine comprises a wind turbine tower 803 to which a nacelle 805 is mounted on top of the wind turbine tower 803. The nacelle 805 comprises a not illustrated bearing which supports a rotation shaft 807 having a hub 809 at one end to which hub plural rotor blades 811 are connected which are then driven by impacting wind. The generator 801 comprises a (outer) rotor portion 813 and a (inner) stator portion 815 having stator portions 816, 818 which may for example be assembled from stator portion 101 or 201 as illustrated in Figs. 1 and 2, respectively. The generator 801 outputs electrical power 817 which is then transformed using a transformer 819 and output in the electric power 821 which may then be transmitted to a utility grid.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Stator portion (101,201) for an electromagnetic machine, in particular for a wind turbine generator (801), comprising:
a yoke portion (101, 201) forming a section of an annulus; and
plural teeth (107, 207) protruding from the yoke portion (101,201) in different radial directions (109),
wherein the stator portion comprises grain oriented material having a grain orientation direction (113, 213) from which the different radial directions (109) deviate by less than a threshold.

2. Stator portion according to claim 1,
wherein the grain oriented material comprises grain oriented ferromagnetic material, in particular comprising steel.

3. Stator portion according to claim 1 or 2,
wherein a first magnetic flux density (B) excited by a first magnetic field strength (H) in the grain orientation direction is greater, in particular by between 10% and 25%, than a second magnetic flux density (B) excited by a second magnetic field strength (H) having a same intensity as the first magnetic field strength but a direction different, in particular by at least 10°, from the grain orientation direction.

4. Stator portion according to one of the preceding claims,
wherein a saturation magnetic flux density (406) is larger, in particular by between 10% and 25%, in the grain orientation direction than in a direction different from the grain orientation direction.

5. Stator portion according to one of the preceding claims,
wherein different regions of the stator portion have a same orientation of grains.

6. Stator portion according to one of the preceding claims,
wherein radial directions (109a) of first teeth (107a) deviate from the grain orientation direction (113) by respective first angles (115a),
wherein radial directions (109z) of second teeth (107z) deviate from the grain orientation direction (113) by respective second angles (115z), wherein the first angles have signs opposite to signs of the second angles.

7. Stator portion according to one of the preceding claims,
wherein an average radial direction (117) of the different radial directions (109) of the teeth (107), deviates from the grain orientation direction (113) by less than 20°, in particular 10°, further in particular 5°.

8. Stator portion according to one of the preceding claims,
wherein an absolute value of a deviation (115) between the grain orientation direction and the radial direction of a respective tooth decreases from a first circumferential end (119) of the stator portion (101), assumes a minimum in a central circumferential region (121) and increases towards a second circumferential end (123) of the stator portion (101).

9. Stator portion according to one of the preceding claims,
wherein the yoke portion (105) forms between a sixth part and a twelfth part of an annulus.

10. Stator portion according to one of the preceding claims, comprising plural sheets of ferromagnetic material, electrically isolated from each other, each sheet having a sheet grain orientation direction deviating from the grain orientation direction (113) by less than 20°, in particular less than 10°.

11. Stator (815) for an electromagnetic machine, in particular generator (801), the stator comprising:
a first stator portion (816) according to one of the preceding claims, having a first stator portion grain orientation direction; and
at least one second stator portion (818) according to one of the preceding claims, having a second stator portion grain orientation direction;
wherein the first stator portion (816) and the at least one second stator portion (818) are fixed to each other to form an annulus, wherein the first stator portion grain orientation direction and the second stator portion grain orientation direction differ by 360°/N, wherein N is the total number of the at least one second stator portion plus 1.

12. Stator according to claim 11, further comprising
at least one electrically conductive winding (233) arranged in slots (125,225) between teeth (107, 207),
wherein a diameter of the stator is between 3 m and 10 m, the stator in particular having between 250 and 400 teeth, wherein the stator is further in particular an inner stator.

13. Wind turbine (800), having a generator (801) comprising a stator (815) according to one of claims 11 or 12.

14. Method for manufacturing a stator portion, the method comprising:
providing grain oriented material having a grain orientation direction (113);
from the grain oriented material, forming a yoke portion (101,201) in a shape of a section of an annulus and plural teeth (107,207) protruding from the yoke portion in different radial directions (109,209) which deviate from the grain orientation direction (113,213) by less than a threshold.
